# EUROPEAN PATENT APPLICATION

(11) **EP 0 891 701 A1**
(43) Date of publication of application: **20.01.1999**
(21) Application number: 98201911.9
(22) Date of filing: 09.06.1998
(51) Int. Cl.: A01G 9/14

(54) **Wire panel for supporting flower pots**

(30) Priority: 15.07.1997 BE 9700620
(71) Applicant: N.V. BEKAERT S.A., 8550 Zwevegem (BE)
(72) Inventor: Ganthier, Jean Pierre, 52100 Bettancourt-la-ferrée (FR)
(74) Representative: Demeester, Gabriel

(57) **Abstract**

The invention relates to a wire panel (1) for supporting flower pots (4) in green-houses, cultivation cells, etc., comprising a panel of welded wire netting made of longitudinal wires (2) and cross wires (3) welded to one another, in which the wire netting panel is folded upon itself in order to provide a first set of longitudinal channels or heating channels (6, 7, 8 and 9) into which heating pipes (10, 11, 12 and 13) can fit, whereby the wire panel (1) moreover is provided with a second set of longitudinal channels or water channels (14, 15) into which a plastic film (16, 17) is to be fit for the drainage of excess water.

## Description

The invention relates to a wire panel for supporting flower pots in greenhouses, cultivation cells, etc., comprising a panel of welded wire netting made of longitudinal wires and cross wires welded to one another, in which the wire netting panel is folded upon itself in order to provide a first set of longitudinal channels or heating channels into which heating pipes can fit.

Such a wire panel or folded welded wire netting panel, which is provided with heating channels into which heating pipes can fit, is already known from the French design No. 863.181 of 16 June 1986 of the French company CERMAST.

One disadvantage of this known wire panel is that when water is sprayed on the plants in the flower pots, most of the excess water flows away along the heating channels, which results in a considerable loss of heat since this water which is flowing away unnecessarily cools off the heating channels.

Another disadvantage is that the heating pipes in the known wire panel extend essentially over the entire bottom of the wire panel, which also results in a less satisfactory heat transfer from the pipes to the flower pots.

Another disadvantage of the wire panel thus far known for supporting flower pots is that the resistance against bending is not sufficiently great for relatively heavy flower pots.

It is an object of the present invention to eliminate the aforementioned disadvantages.

To this end, the invention proposes that a wire panel of the type mentioned in the introduction should moreover be provided with a second set of longitudinal channels or water channels into which a plastic film is to be fit for the drainage of excess water.

By preference, the depth of this second set of water channels is greater than the depth of the heating channels.

The great advantage of separating the heating channels and the water channels for draining the excess water in a wire panel according to the invention is that the greatest part of the excess water no longer comes into contact with the heating pipes, which results in a considerable energy saving.

Another advantage of the wire panel according to the invention is that the heating channels and the water channels lie at different depths, which results in a considerable improvement in the stiffness of the wire panel and an increase in the resistance to bending.

In the following description, the invention will be explained in more detail on the basis of the accompanying drawing. In the drawing :
Fig. 1 shows in perspective a part of a wire panel according to the invention ;
Fig. 2 shows in cross-section the wire panel according to the invention on a corresponding support block.

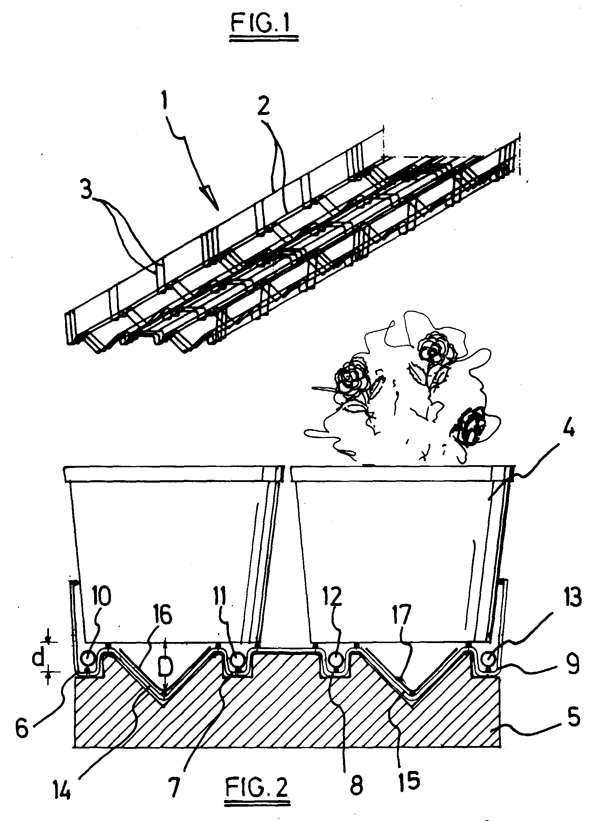

The wire panel 1 according to the invention shown in perspective in Figure 1 consists of a panel of welded wire netting made of longitudinal wires 2 and cross wires 3 welded to one another. The longitudinal and cross wires 2 and 3 are made of steel wire having a diameter of approximately 3 to 5 mm. The wire panel is suitable, for example, for supporting two rows of flower pots 4, each with nine flower pots. The flower pots have a weight, for example, of 10 kg or more per flower pot. The wire panel 1 according to the invention has, for example, the following dimensions in a flattened condition : a length of approximately 3,005 mm and a width of approximately 1,035 mm. In the specially folded form according to the invention, the distance between the outer longitudinal wires is approximately 660 mm. The wire panel 1 according to the invention is supported at three different places along the length of the panel by support blocks 5 made of plastic or wood.

Figure 2 shows the specially folded wire panel 1 according to the invention in cross-section. The originally flat wire panel 1 is folded in such a manner that the panel 1 is provided with a first set of longitudinal channels or heating channels 6, 7, 8 and 9, into which the heating pipes 10, 11. 12 and 13 fit. The cross-section of these heating channels 6, 7, 8 and 9 is almost U-shaped or right-angled or, by preference, rectangular. The heating channels 6, 7, 8 and 9 are specially designed so that flexible plastic pipes 10, 11, 12 and 13 having a diameter of 25 mm, for example, will fit in them. The warm water for heating the plants in the flower pots is transported through the pipes 10, 11, 12 and 13.

In addition, the specially folded wire panel 1 is provided with a second set of longitudinal channels or water channels 14 and 15 into which a strip of plastic film 16 and 17 is fit for draining off the excess water through the apertures in the bottom of the flower pots 4. The cross-section of the water channels 14 and 15 is preferably V-shaped or essentially triangular in shape. It should also be possible to give these water channels 14 and 15 a different cross-sectional shape, such as for example a U-shape or a right-angled shape. A folded strip of plastic film 16 and 17 is preferably placed in each longitudinal channel or water channel 14 and 15 for collecting the excess water via the apertures in the bottom of the flower pots 14.

Figure 2 clearly shows that the depth D of the longitudinal channels or water channels 14 and 15 is greater than the depth d of the longitudinal channels or heating channels 6, 7, 8 and 9.

Figure 2 also shows that the longitudinal edges of the wire panel 1 are folded back at an obtuse angle in order thus to form two upright longitudinal edges to facilitate stacking of the panels and to hold the flower pots better in the right place when the panels are in use.

The distance between the cross wires 3 is determined, among other things, by the size and number of the flower pots to be supported, as well as by the number of support blocks 5 to he placed.

It is clear that within the context of the invention numerous variants of a wire panel 1 according to the invention are possible. We should once again note that all the dimensions mentioned above are given only as examples.

## Claims

1. Wire panel (1) for supporting flower pots (4) in greenhouses, cultivation cells, etc., comprising a panel of welded wire netting made of longitudinal wires (2) and cross wires (3) welded to one another, in which the wire netting panel is folded upon itself in order to provide a first set of longitudinal channels or heating channels (6, 7, 8 and 9) into which heating pipes (10, 11, 12 and 13) can fit, characterized in that the wire panel (1) moreover is provided with a second set of longitudinal channels or water channels (14, 15) into which a plastic film (16, 17) is to be fit for the drainage of excess water.

2. Wire panel according to claim 1, characterized in that the cross-section of the heating channels (6, 7, 8, 9) is essentially U-shaped or rectangular.

3. Wire panel according to claim 1 or claim 2, characterized in that the cross-section of the water channels (14, 15) is essentially V-shaped or triangular in shape.

4. Wire panel according to one or more of the foregoing claims 1 - 3, characterized in that the depth (D) of this second set of water channels (14, 15) is greater than the depth (d) of the heating channels.

5. Wire panel according to one or more of the foregoing claims 1 - 4, characterized in that the wire panel (1) is provided with upright edges which are folded back at an obtuse angle.

6. Wire panel according to one or more of the foregoing claims 1 - 5, characterized in that one water channel (14, 15) is placed between each two heating channels (6, 7, 8, 9).
